# DEMANDE DE BREVET EUROPEEN

(11) **EP 4 488 856 A1**
(43) Date de publication de la demande: **08.01.2025**
(21) Numéro de dépôt: 24185980.0
(22) Date de dépôt: 02.07.2024
(51) Int. Cl.: G06F 21/10, H04L 9/40, H04W 12/08

(54) **PASSERELLE DE COMMUNICATION AVEC FILTRAGE PARAMÉTRABLE ENTRE DOMAINES OUVERT ET AVIONIQUE, AÉRONEF, PROCÉDÉ DE FILTRAGE ET PROGRAMME D ORDINATEUR ASSOCIÉS**

(30) Priorité: 03.07.2023 FR 2307071
(71) Demandeur: THALES, 92190 Meudon (FR)
(72) Inventeur: MONNIER, Stéphane, 33700 MERIGNAC (FR); NOINSKI, Alexandre, 33700 MERIGNAC (FR); DESCARGUES, Gilles, 31036 TOULOUSE (FR)
(74) Mandataire: Lavoix

(57) **Abrégé**

Cette passerelle de communication (30), embarquée à bord d'un aéronef (5) et connectée entre des appareils électroniques (25) d'un domaine ouvert (18) et des systèmes avioniques (20) d'un domaine avionique (15), comprend :
- un module (42) d'acquisition, de la part d'un appareil électronique (25), d'au moins un message de données à destination d'un système avionique (20) ;
- un module (44) de filtrage de chaque message acquis respectif, selon un jeu de critère(s) de filtrage qui est sélectionné, parmi un ensemble de critères de filtrage, en fonction d'un type dudit message ; et
- un module (46) de transmission de chaque message validé à destination du système avionique (20) correspondant.

Au moins un critère de filtrage dudit jeu est paramétré via un paramètre de filtrage respectif, et au moins un paramètre de filtrage dépend du système avionique (20) destinataire, en étant variable d'un système avionique (20) à l'autre.

## Description

La présente invention concerne une passerelle électronique de communication destinée à être embarquée à bord d'un aéronef, l'aéronef comportant une installation de communication compartimentée en un domaine avionique et un domaine ouvert, externe au domaine avionique, l'installation de communication comportant plusieurs systèmes avioniques appartenant au domaine avionique et un ou plusieurs appareils électroniques appartenant au domaine ouvert, la passerelle de communication étant apte à être connectée entre le ou les appareils électroniques et les systèmes avioniques. La passerelle est alors en interface entre le domaine ouvert et le domaine avionique.

L'invention concerne également un aéronef comprenant une telle passerelle de communication.

La présente invention concerne aussi un procédé de filtrage de message(s) de données au sein d'une installation de communication avionique destinée à être embarquée à bord d'un aéronef, le procédé de filtrage étant mis en oeuvre par une telle passerelle de communication.

L'invention concerne également un programme d'ordinateur comportant des instructions logicielles qui, lorsqu'elles sont exécutées par un ordinateur, mettent en oeuvre un tel procédé de filtrage.

L'invention concerne plus particulièrement un avion, tout en étant applicable à tout type d'aéronef, tel qu'un hélicoptère ou un drone.

L'invention concerne en particulier le domaine de la cyber sécurité dans un contexte avionique.

Un aéronef comporte classiquement des systèmes avioniques permettant d'aider le pilotage de l'aéronef, tels qu'un système de gestion de vol, ou FMS (de l'anglais *Flight Management System*) ; un système de guidage, ou FG (de l'anglais *Flight Guidance*) ; un système de commandes de vol, ou FCS (de l'anglais *Flight Control System*) ; etc. Ces systèmes avioniques échangent entre eux des informations grâce à un réseau de communication de l'aéronef, lesquels font partie d'une installation de communication au sein de l'aéronef, incluant généralement d'autres systèmes que les systèmes avioniques. L'installation de communication comprend notamment des systèmes mettant en oeuvre des fonctions relatives à la compagnie aérienne exploitant l'aéronef, tel qu'un système de maintenance, ou CMS (de l'anglais *Centralized Maintenance System*) ; ou un système de gestion de la cabine passagers.

Les systèmes avioniques sont regroupés dans un domaine, dit domaine avionique, auquel correspond un niveau de sécurité (de l'anglais *security level*) requis le plus élevé de l'installation de communication de l'aéronef afin de garantir que le fonctionnement des fonctions mises en oeuvre par les systèmes avioniques ne risque pas d'être perturbé par des communications avec des équipements extérieurs au domaine avionique. Le niveau de sécurité requis pour les autres équipements est moins élevé que le niveau de sécurité requis pour le domaine avionique.

L'installation de communication est par exemple conforme au standard ARINC 811 qui définit différents domaines ayant des niveaux de sécurité différents dans une installation de communication d'un aéronef, notamment : un domaine ACD (de l'anglais *Aircraft Control Domain*) correspondant au domaine avionique précité ; un domaine AISD (de l'anglais *Airline Information Services Domain*) comprenant des équipements mettant en oeuvre les fonctions relatives à la compagnie aérienne (maintenance, gestion de la cabine, etc.) ; et un domaine PIESD (de l'anglais *Passenger Information and Entertainement Services Domain*) relatif au divertissement et à l'information des passagers.

Conformément au standard ARINC 811, le niveau de sécurité du domaine ACD correspond à un niveau de sécurité (de l'anglais *safety level*) le plus élevé de l'installation de communication de l'aéronef car les fonctions mises en oeuvre par les équipements du domaine ACD peuvent être essentielles pour le contrôle du vol de l'aéronef. Le niveau de sécurité du domaine AISD est moins élevé que celui du domaine ACD, les fonctions mises en oeuvre dans le domaine AISD étant moins essentielles, au moins à court terme, pour le contrôle du vol de l'aéronef. Le niveau de sécurité du domaine PIESD est moins élevé que le niveau de sécurité du domaine AISD.

L'invention concerne alors l'apport d'informations dans le domaine avionique certifié, tel que le domaine ACD, depuis le domaine ouvert non certifié, notamment depuis le domaine AISD.

L'échange d'informations d'un domaine ayant un niveau de sécurité moins élevé (extérieur au domaine ACD) vers un domaine ayant un niveau de sécurité plus élevé (domaine ACD) est très fortement restreint afin de ne pas compromettre la sécurité du domaine ayant le niveau de sécurité le plus élevé.

Pour répondre à ce besoin de passerelle de sécurité entre le domaine ouvert et le domaine avionique de niveau de sécurité plus élevé, le document EP 3 585 030 A1 décrit une passerelle de communication comprenant une barrière d'un premier type pour filtrer les informations issues du domaine ouvert de façon à laisser entrer lesdites informations dans un domaine de communication seulement si elles correspondent à une communication authentifiée, une barrière d'un deuxième type pour filtrer des informations transmises du domaine de communication vers le domaine avionique en réalisant au moins un filtrage syntaxique desdites informations. La passerelle de communication est également configurée pour effectuer ensuite un filtrage sémantique desdites informations.

Toutefois, une telle passerelle de sécurité n'est pas optimale.

Le but de l'invention est alors de proposer une passerelle électronique de communication destinée à être embarquée à bord d'un aéronef, permettant d'améliorer encore le filtrage des messages issus du domaine ouvert à destination du domaine avionique, notamment pour réduire un risque de cyberattaque visant à entraîner un dysfonctionnement des systèmes avioniques.

A cet effet, l'invention a pour objet une passerelle électronique de communication destinée à être embarquée à bord d'un aéronef, l'aéronef comportant une installation de communication compartimentée en un domaine avionique et un domaine ouvert, externe au domaine avionique, l'installation de communication comportant plusieurs systèmes avioniques appartenant au domaine avionique et un ou plusieurs appareils électroniques appartenant au domaine ouvert,

La passerelle de communication étant apte à être connectée entre le ou les appareils électroniques et les systèmes avioniques, la passerelle de communication comprenant :
- un module d'acquisition configuré pour acquérir, de la part d'un appareil électronique appartenant au domaine ouvert, au moins un message de données à destination d'un système avionique appartenant au domaine avionique ;
- un module de filtrage connecté en sortie du module d'acquisition et configuré pour filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- un module de transmission connecté en sortie du module de filtrage et configuré pour transmettre, à destination du système avionique correspondant, chaque message validé par le module de filtrage ;
   au moins un critère de filtrage dudit jeu étant paramétré via un paramètre de filtrage respectif, et au moins un paramètre de filtrage dépendant du système avionique destinataire, en étant variable d'un système avionique à l'autre.

Le paramétrage d'au moins un critère de filtrage dudit jeu via un paramètre de filtrage respectif permet alors d'avoir un filtrage configurable pour la passerelle de communication, et le fait en outre qu'au moins un paramètre de filtrage dépende du système avionique destinataire, en étant variable d'un système avionique à l'autre, permet d'avoir un filtrage adapté à chaque système avionique destinataire. Le filtrage effectué par la passerelle de communication est alors optimisé en fonction de chaque système avionique destinataire.

Suivant d'autres aspects avantageux de l'invention, la passerelle de communication comprend une ou plusieurs des caractéristiques suivantes, prises isolément ou suivant toutes les combinaisons techniquement possibles :
- la passerelle comprend en outre un module d'obtention configuré pour obtenir, depuis un dispositif électronique externe à la passerelle, un jeu de paramètre(s) de filtrage associé au jeu de critère(s) de filtrage,
   le module de filtrage étant alors configuré pour filtrer chaque message selon le jeu de critère(s) de filtrage paramétré via le jeu obtenu de paramètre(s) de filtrage ;
- chaque message de données acquis comporte plusieurs champs de différents types, et l'ensemble de critères de filtrage inclut au moins un critère de filtrage dépendant d'un seul type de champ, dit critère mono-champ ;
   chaque critère mono-champ étant choisi parmi le groupe consistant en : un critère basé sur un nombre d'occurrences d'un type donné de champ dans le message ; un critère basé sur un nombre d'occurrences d'un caractère donné dans un champ donné du message ; et un critère basé sur l'appartenance d'une valeur d'un champ donné du message à une plage de valeurs prédéfinie ;
- chaque message de données acquis comporte plusieurs champs de différents types, et l'ensemble de critères de filtrage inclut au moins un critère de filtrage dépendant de plusieurs types de champ à la fois, dit critère multi-champ ;
   au moins un critère multi-champ étant de préférence basé sur la combinaison d'une valeur d'un type primaire de champ du message et d'un nombre d'occurrences d'un type secondaire de champ dudit message ;
- chaque message de données acquis comporte plusieurs champs de différents types, et l'ensemble de critères de filtrage inclut au moins un critère de condition de champ(s) dans le message ;
   chaque critère de condition étant choisi parmi le groupe consistant en : une interdiction d'un type donné de champ dans le message ; une obligation d'un type donné de champ dans le message ; une exclusion d'un premier type de champ par rapport à un deuxième type de champ du message ; et une vérification d'un ordonnancement donné de certains champs dans le message ;
- l'ensemble de critères de filtrage inclut au moins deux types distincts de critères parmi le groupe de types de critères consistant en : critère mono-champ, critère multi-champ, et critère de condition ;
   l'ensemble de critères de filtrage incluant de préférence au moins un critère mono-champ, au moins un critère multi-champ, et au moins un critère de condition ;
- le domaine avionique est un domaine correspondant à un niveau de sécurité le plus élevé à bord de l'aéronef ;
   le domaine avionique étant de préférence le domaine ACD selon la norme ARINC 811 du 20 décembre 2005 ; et
- l'ensemble de critère(s) de filtrage comporte un jeu de critère(s) syntaxique(s) et/ou un jeu de critère(s) sémantique(s) ;
   chaque critère syntaxique étant de préférence choisi parmi le groupe consistant en : l'appartenance de l'émetteur du message à une liste d'émetteurs autorisés, l'appartenance du destinataire du message à une liste de destinataires autorisés, et la conformité du message à l'un des formats prédéfinis autorisés ;
   chaque critère sémantique étant de préférence choisi parmi le groupe consistant en : l'appartenance d'une ou plusieurs données du message à une plage de valeurs autorisées, la cohérence d'au moins une donnée du message par rapport à une référence prédéfinie, et la cohérence entre au moins deux données du message.

L'invention concerne également un aéronef comportant une installation de communication compartimenté en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, et une passerelle électronique de communication connectée entre le ou les appareils électroniques et les systèmes avioniques, la passerelle de communication étant telle que définie ci-dessus.

L'invention concerne aussi un procédé de filtrage de message(s) de données au sein d'une installation de communication avionique destiné à être embarqué à bord d'un aéronef, l'installation de communication étant compartimentée en un domaine avionique et un domaine ouvert, externe au domaine avionique, et comportant plusieurs systèmes avioniques appartenant au domaine avionique et un ou plusieurs appareils électroniques appartenant au domaine ouvert, le procédé de filtrage étant mis en oeuvre par une passerelle électronique de communication et comprenant les étapes suivantes :
- acquérir, de la part d'un appareil électronique appartenant au domaine ouvert, au moins un message de données à destination d'un système avionique appartenant au domaine avionique ;
- filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- transmettre chaque message validé à destination du système avionique correspondant ;
   au moins un critère de filtrage dudit jeu étant paramétré via un paramètre de filtrage respectif, et au moins un paramètre de filtrage dépendant du système avionique destinataire, en étant variable d'un système avionique à l'autre.

L'invention concerne également un programme d'ordinateur comportant des instructions logicielles qui, lorsqu'elles sont exécutées par un ordinateur, mettent en oeuvre un procédé de filtrage tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

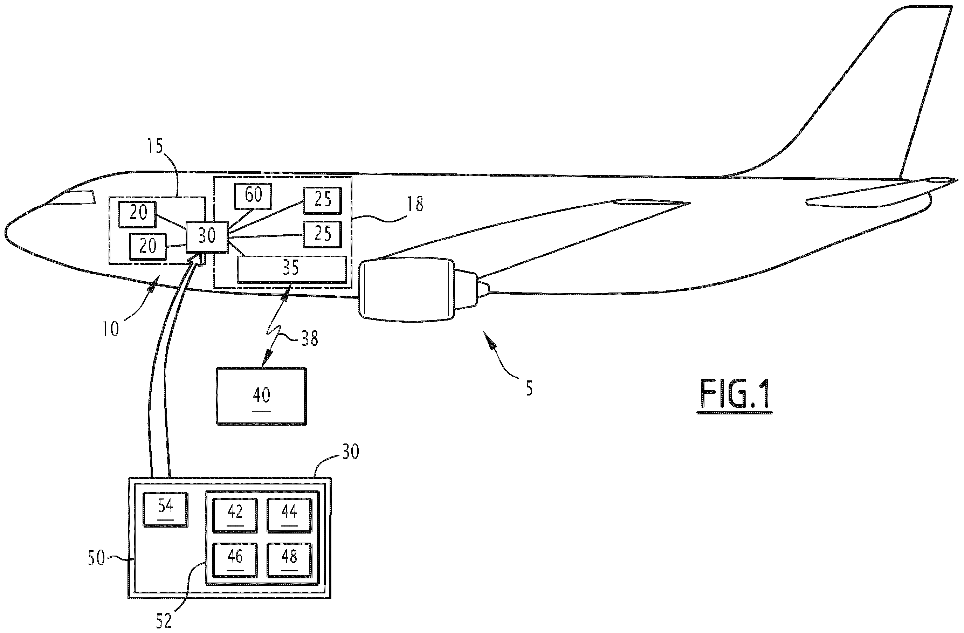

- la figure 1 est une représentation schématique d'un aéronef selon l'invention comprenant une installation de communication compartimentée en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, et une passerelle électronique de communication connectée entre le ou les appareils électroniques et les systèmes avioniques ; et

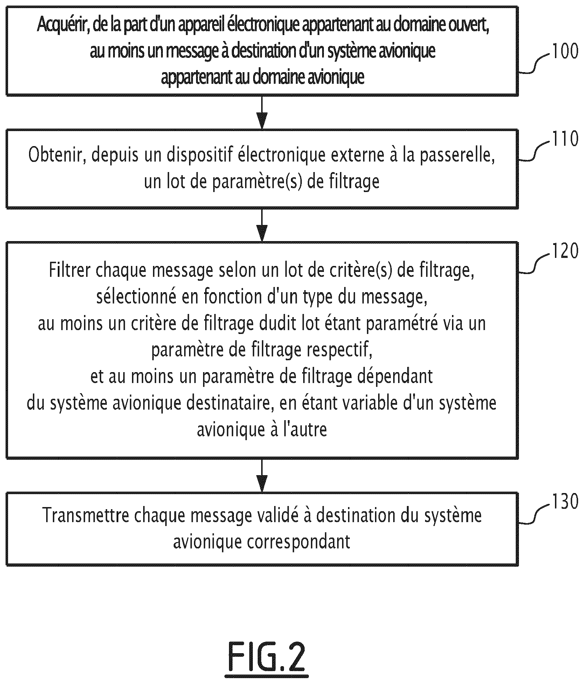

- la figure 2 est un organigramme d'un procédé, selon l'invention, de filtrage de message(s) de données au sein de l'installation de communication avionique de la figure 1, le procédé étant mis en oeuvre par la passerelle électronique de communication.

Les expressions « sensiblement égal(e) à » et « de l'ordre de » définissent une relation d'égalité à plus ou moins 20%, de préférence à plus ou moins 10%, et de préférence encore à plus ou moins 5%.

Sur la figure 1, un aéronef 5 comprend une installation de communication 10 compartimentée en un domaine avionique 15 et un domaine ouvert 18, externe au domaine avionique 15.

L'installation de communication 10 comporte plusieurs systèmes avioniques 20 appartenant au domaine avionique 15 ; ainsi qu'un ou plusieurs appareils électroniques 25, externes au domaine avionique 15 et appartenant au domaine ouvert 18 ; et une passerelle électronique de communication 30 connectée entre le ou les appareils électroniques 25 et les systèmes avioniques 20. Dans l'exemple de la figure 1, l'installation de communication 10 comporte plusieurs appareils électroniques 25, chacun appartenant au domaine ouvert 18.

En complément, l'installation de communication 10 comprend en outre un serveur de communication 35 communiquant via une liaison de communication 38 avec au moins un équipement électronique 40, externe à l'aéronef 5.

Le domaine avionique 15 est un domaine correspondant à un niveau de sécurité le plus élevé à bord de l'aéronef 5, en particulier le niveau de sécurité requis le plus élevé de l'installation de communication 10 de l'aéronef 5.

Le domaine avionique 15 est alors un domaine pour limiter un risque de perturbation - par au moins une communication avec un appareil ou dispositif électronique externe au domaine avionique 15 - de fonction(s) mise(s) en oeuvre par l'au moins un système avionique 20 du domaine avionique 15. Le domaine avionique 15 inclut le ou les systèmes avioniques 20.

Le domaine avionique 15 est typiquement le domaine ACD selon la norme ARINC 811 du 20 décembre 2005.

Le domaine ouvert 18 est un domaine auquel correspond un niveau de sécurité moins élevé que le niveau de sécurité du domaine avionique 15. Le domaine ouvert 18 inclut le ou les appareils électroniques 25.

Chaque système avionique 20 est embarqué à bord de l'aéronef 5 et appartient au domaine avionique 15. Chaque système avionique 20 est connu en soi, également appelé calculateur avionique, et est configuré pour mettre en oeuvre une ou plusieurs fonctions avioniques respectives.

Chaque système avionique 20 est par exemple choisi parmi le groupe consistant en : un système de gestion du vol, également appelé FMS (de l'anglais *Flight Management System*) ; un système de guidage, ou FG (de l'anglais *Flight Guidance*) ; un système de commandes de vol, ou FCS (de l'anglais *Flight Control System*) ; un système de positionnement par satellite GNSS (de l'anglais *Global Navigation Satellite System*), tel qu'un système GPS (de l'anglais *Global Positioning System*) ; un système de référence inertielle, également appelé système IRS (de l'anglais *Inertial Reference System*) ; un système d'aide à l'atterrissage ILS (de l'anglais *Instrument Landing System*) ou un système d'aide à l'atterrissage MLS (de l'anglais *Microwave Landing System*) ; un système de prévention de sortie de piste actif, également appelé système ROPS (de l'anglais *Runway Overrun Prévention System*) ; et un radioaltimètre, également noté RA (de l'anglais *RadioAltimeter*).

Chaque appareil électronique 25 appartenant au domaine ouvert 18 ne met pas en oeuvre une fonction avionique respective, et ne nécessite alors généralement pas de faire l'objet d'une certification spécifique.

La passerelle électronique de communication 30, appelée par la suite passerelle de communication 30 ou encore passerelle 30, est en interface entre le domaine ouvert 18 et le domaine avionique 15. Un message de données transmis entre le domaine ouvert 18 et le domaine avionique 15, c'est-à-dire depuis le domaine ouvert 18 vers le domaine avionique 15, ou inversement depuis le domaine avionique 15 vers le domaine ouvert 18, transite alors nécessairement par la passerelle de communication 30.

La passerelle de communication 30 est également appelée passerelle de sécurité, et est configurée pour réaliser au moins un filtrage d'un message de données destiné à un système avionique 20 respectif.

La passerelle de communication 30 comprend un module 42 d'acquisition d'au moins un message de données à destination d'un système avionique 20 ; un module 44 de filtrage de chaque message acquis respectif, en validant ledit message s'il respecte un jeu de critère(s) de filtrage et en le bloquant dès qu'un critère de filtrage dudit jeu n'est pas respecté, le module de filtrage 44 étant connecté en sortie du module d'acquisition 42 ; et un module 46 de transmission, à destination du système avionique 20 correspondant, de chaque message validé par le module de filtrage 44, le module de transmission 46 étant connecté en sortie du module de filtrage 44. L'homme du métier comprendra qu'un jeu de critère(s) de filtrage s'entend comme un groupe de critère(s) de filtrage, ou encore un lot de critère(s) de filtrage, c'est-à-dire un ensemble d'un ou plusieurs critères de filtrage.

En complément facultatif, la passerelle 30 comprend en outre un module 48 d'obtention d'un jeu de paramètre(s) de filtrage associé au jeu de critère(s) de filtrage. L'homme du métier comprendra qu'un jeu de paramètre(s) de filtrage s'entend comme un groupe de paramètre(s) de filtrage, ou encore un lot de paramètre(s) de filtrage, c'est-à-dire un ensemble d'un ou plusieurs paramètres de filtrage.

La passerelle de communication 30 comprend par exemple une unité de traitement d'informations 50 formée typiquement d'une mémoire 52 et d'un processeur 54 associé à la mémoire 52.

Selon cet exemple, le module d'acquisition 42, le module de filtrage 44 et le module de transmission 46, ainsi qu'en complément facultatif le module d'obtention 48, sont réalisés chacun sous forme d'un logiciel, ou d'une brique logicielle, exécutable par le processeur 54. La mémoire 52 de la passerelle de communication 30 est alors apte à stocker un logiciel d'acquisition d'au moins un message de données à destination d'un système avionique 20 ; un logiciel de filtrage de chaque message acquis respectif ; et un logiciel de transmission, à destination du système avionique 20 correspondant, de chaque message validé par le logiciel de filtrage. En complément facultatif, la mémoire 52 de la passerelle de communication 30 est apte à stocker un logiciel d'obtention du jeu de paramètre(s) de filtrage associé au jeu de critère(s) de filtrage. Le processeur 54 de la passerelle de communication 30 est alors apte à exécuter chacun des logiciels parmi le logiciel d'acquisition, le logiciel de filtrage et le logiciel de transmission, ainsi qu'en complément facultatif le logiciel d'obtention.

En variante non représentée, le module d'acquisition 42, le module de filtrage 44 et le module de transmission 46, ainsi qu'en complément facultatif le module d'obtention 48, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*)*.*

Lorsque la passerelle de communication 30 est réalisée sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Le serveur de communication 35 est configuré pour communiquer via la liaison de communication 38 avec l'au moins un équipement électronique externe 40, ledit au moins un équipement électronique externe 40 étant par exemple une station au sol, ou encore un équipement informatique en nuage (de l'anglais *cloud computing*). Le serveur de communication 35 est préférentiellement connecté à la passerelle de communication 30. Le serveur de communication 35 appartient typiquement au domaine ouvert 18.

Le serveur de communication 35 est connu en soi, et comporte notamment un émetteur-récepteur, non représenté, compatible avec la liaison de communication 38. La liaison de communication 38 est typiquement une liaison radioélectrique, c'est-à-dire une liaison par ondes radioélectriques, tel qu'une liaison par satellite. L'émetteur-récepteur est alors un émetteur-récepteur radioélectrique.

L'équipement électronique externe 40 est typiquement connecté à une infrastructure informatique d'un centre de commande opérationnel, également appelé OCC (de l'anglais *Operational Control Center*). L'équipement électronique externe 40 est alors avantageusement configuré pour transmettre des données, comme par exemple un plan de vol de l'aéronef 5 et des informations relatives à l'aéronef 5, telles que sa masse, sa configuration, son équilibrage, ou encore son identifiant.

Le module d'acquisition 42 est configuré pour acquérir, de la part d'un appareil électronique 25 appartenant au domaine ouvert 18, au moins un message de données à destination d'un système avionique 20 respectif, appartenant au domaine avionique 15. L'appareil électronique 25, de la part duquel le message est acquis, est typiquement le serveur de communication 35, si le message est émis depuis l'équipement électronique externe 40.

Le module d'acquisition 42 est par exemple configuré pour acquérir chaque message selon un protocole de communication avionique respectif.

Le protocole de communication avionique est par exemple choisi parmi le groupe consistant en : un protocole conforme à la norme ARINC 702 ; un protocole conforme à la norme ARINC 739 ; un protocole conforme à la norme ARINC 619 ; un protocole conforme à la norme ARINC 429 ; et un protocole conforme à la norme FANS (de l'anglais *Future Air Navigation System*) A associé à l'EUROCAE ED-100.

Chaque message de données acquis comporte un en-tête (de l'anglais *header*) et une partie utile, également appelée charge utile (de l'anglais *data payload*), contenant les données utiles du message, c'est-à-dire les données à transmettre au système avionique 20 correspondant.

L'en-tête comprend typiquement un préambule servant à la synchronisation du message, et comportant par exemple en outre un délimiteur pour signaler le début des informations du message ; une indication relative à la destination, telle qu'une adresse de destination, c'est-à-dire une adresse ou un identifiant du système avionique 20 destinataire du message ; une indication relative à la source, telle qu'une adresse de source, c'est-à-dire une adresse ou un identifiant de l'émetteur du message ; et un code de contrôle, tel qu'un code de contrôle de redondance cyclique ou CRC (de l'anglais *Cyclic Redundancy Check*)*.*

La partie utile du message comporte plusieurs champs, la partie utile étant découpée, i.e. décomposée en plusieurs portions successives, chaque portion de partie utile formant un champ respectif. La partie utile du message comporte généralement plusieurs champs de différents types, et ces types dépendent typiquement du protocole de communication avionique.

Par type de champ, on entend un type de grandeur représentée par le champ, c'est-à-dire le type de la grandeur dont une valeur est contenue dans ledit champ. Pour chaque champ, chaque protocole de communication avionique définit le type du champ, avec généralement une dénomination dudit type, et une plage de valeurs associée à ce type. Par exemple, dans la norme ARINC 702 définissant le contenu de messages contenant typiquement des plans de vol, les différents types de champs correspondent à différents types de grandeurs associées à des points de passage du plan de vol, telles qu'une manière de passer un point de passage, une latitude du point de passage, une longitude du point de passage, une manière d'atteindre le point de passage, etc.

À titre d'exemple, selon la norme ARINC 702, les types de champs sont définis par des identifiants (de l'anglais TAG) dans le message, ou encore par leur positionnement dans le message selon un ordre défini dans la norme.

Des exemples de types de champ pour le protocole conforme à la norme ARINC 702 sont alors les suivants : une latitude du point de passage, une longitude du point de passage, une manière de passer un point de passage, une manière d'atteindre le point de passage, un aéroport de départ, un aéroport d'arrivée.

À titre d'exemple, selon la norme ARINC 739, chaque type précise un encodage des valeurs de bits d'un label ARINC 429 parmi plusieurs encodages distincts possibles desdites valeurs de bits.

Des exemples de types de champ pour le protocole conforme à la norme ARINC 739 sont alors les suivants : couleur (de l'anglais COLOR) ; numéro de ligne (de l'anglais LINE NUMBER) ; fonction (de l'anglais FUNCTION) ; et position du caractère initial (de l'anglais INITIAL CHARACTER POSITION).

À titre d'exemple, selon la norme ARINC 619, les types de champs sont définis par leur position par rapport aux autres champs dans le message.

Des exemples de types de champ pour le protocole conforme à la norme ARINC 619 sont alors les suivants : station de départ (de l'anglais *Departure Station*) ; heure prévue de vol (de l'anglais *Scheduled date of flight*)*.*

À titre d'exemple, selon la norme ARINC 429, les types de champs sont définis par leur positionnement dans le message, typiquement de 32 bits. L'allocation bits et champs change en fonction de la valeur du champ « Label » associé aux 8 premiers bits du mot de 32 bits, et potentiellement de la valeur d'un autre champ précisant comment il faut interpréter la suite des bits du mot de 32 bits.

Des exemples de types de champ pour le protocole conforme à la norme ARINC 429 sont alors les suivants : une position de l'aéronef (de l'anglais *SV Position X*) ; une vitesse air de référence (de l'anglais *Reference Air speed*).

Le module de filtrage 44 est configuré pour filtrer chaque message acquis respectif, en validant ledit message s'il respecte un jeu de critère(s) de filtrage et en le bloquant dès qu'un critère de filtrage dudit jeu n'est pas respecté. Le jeu de critère(s) de filtrage est sélectionné, parmi un ensemble de critères de filtrage, en fonction d'un type dudit message.

Par valider le message, on entend accepter le message, c'est-à-dire autoriser le message pour transmission vers le domaine avionique 15. De par le filtrage des messages via le module de filtrage 44, la passerelle de communication 30 remplit une fonctionnalité de cyber sécurité. Autrement dit, la passerelle de communication 30 forme alors une barrière de sécurité entre le domaine ouvert 18 et le domaine avionique 15. En d'autres termes encore, l'entrée de message(s) à l'intérieur du domaine avionique 15 est sécurisée via le filtrage effectué par la passerelle de communication 30, en particulier par le module de filtrage 44.

Par bloquer le message, on entend refuser le message, c'est-à-dire interdire la transmission du message vers le domaine avionique 15. Le module de filtrage 44 est alors typiquement configuré pour bloquer un message ne respectant pas un critère de filtrage dudit jeu, en supprimant ledit message. En complément facultatif, le module de filtrage 44 est en outre configuré pour conserver une trace (de l'anglais *log*) de chaque message bloqué, avant la suppression dudit message.

Selon l'invention, au moins un critère de filtrage dudit jeu est paramétré via un paramètre de filtrage respectif, et au moins un paramètre de filtrage dépend du système avionique 20 destinataire, en étant variable d'un système avionique 20 à l'autre. Le module de filtrage 44 est alors configuré pour déterminer le système avionique 20 qui est destinataire du message à filtrer, par exemple à partir de l'indication relative à la destination contenue dans l'en-tête du message ; puis pour utiliser le ou les paramètres de filtrage associés audit système avionique 20 destinataire.

L'ensemble de critères de filtrage inclut typiquement au moins un critère de filtrage dépendant d'un seul type de champ, dit critère mono-champ.

Chaque critère mono-champ est par exemple choisi parmi le groupe de critères consistant en : un critère basé sur un nombre d'occurrences d'un type donné de champ dans le message ; un critère basé sur un nombre d'occurrences d'un caractère donné dans un champ donné du message ; et un critère basé sur l'appartenance d'une valeur d'un champ donné du message à une plage de valeurs prédéfinie.

Lorsque le critère de filtrage est le critère basé sur le nombre d'occurrences d'un type donné de champ dans le message, le paramètre de filtrage associé à ce critère est typiquement une valeur ou plage de valeurs dudit nombre d'occurrences, ou encore une valeur du type donné de champ, i.e. un paramètre définissant le type donné de champ.

Le critère basé sur le nombre d'occurrences d'un type donné de champ correspond par exemple au nombre de points de passage (de l'anglais *waypoint*) dans un message de plan de vol, le module de filtrage 44 étant alors configuré pour vérifier que le nombre de points de passage contenus dans le message de plan de vol est inférieur à une valeur maximale prédéfinie ou paramétrée, et/ou est supérieur à une valeur minimale prédéfinie ou paramétrée.

Lorsque le critère de filtrage est le critère basé sur le nombre d'occurrences d'un caractère donné dans un champ donné du message, le paramètre de filtrage associé à ce critère est typiquement une valeur ou plage de valeurs dudit nombre d'occurrences, ou encore une valeur du caractère donné, i.e. un paramètre définissant ledit caractère donné.

Le critère basé sur le nombre d'occurrences d'un caractère donné dans un champ donné correspond par exemple au calcul d'un nombre de caractère « . » dans une requête associée à SNMP (de l'anglais *Simple Network Management Protocol*) demandant des informations sur un identifiant d'objet ou OID (de l'anglais *Object IDentifier*)*,* le module de filtrage 44 étant alors configuré pour vérifier que le nombre de « . » contenus dans l'OID est inférieur à une valeur maximale prédéfinie ou paramétrée, et/ou est supérieur à une valeur minimale prédéfinie ou paramétrée. L'OID encodé de la forme « 1.3.6.1.4.1.2680.1.2.7.3.2.1 » contient par exemple 12 caractères « . », et le nombre d'occurrences du caractère « . » est alors égal à 12.

Lorsque le critère de filtrage est le critère basé sur l'appartenance d'une valeur d'un champ donné du message à une plage de valeurs prédéfinie, le paramètre de filtrage associé à ce critère est typiquement un paramètre définissant le type donné de champ, ou encore ladite plage de valeurs à laquelle l'appartenance est testée.

Le critère basé sur l'appartenance d'une valeur d'un champ donné à une plage de valeurs prédéfinie correspond par exemple à des fréquences reçues compatibles des capacités du système avionique 20 destinataire, le module de filtrage 44 étant alors configuré pour vérifier que lesdites fréquences reçues appartiennent à la plage prédéfinie de valeurs de fréquences.

En complément ou en variante, l'ensemble de critères de filtrage inclut typiquement au moins un critère de filtrage dépendant de plusieurs types de champ à la fois, dit critère multi-champ.

Au moins un critère multi-champ est par exemple basé sur la combinaison d'une valeur d'un type primaire de champ du message et d'un nombre d'occurrences d'un type secondaire de champ dudit message, le type secondaire étant distinct du type primaire.

Le critère multi-champ permet par exemple de vérifier qu'un texte à afficher est compatible de la capacité d'affichage d'un écran du système avionique 20 destinataire, le critère multi-champ prenant alors en compte la position de début d'affichage, correspondant au type primaire, et le nombre de caractères à afficher, le caractère à afficher correspondant au type secondaire. Le module de filtrage 44 est alors configuré pour vérifier que la combinaison de ces deux grandeurs est compatible de ladite capacité d'affichage.

Dans les exemples précités, les plages de valeurs prédéfinies sont de préférence déterminées en fonction d'un domaine d'usage prédéfini pour le système avionique 20 destinataire, c'est-à-dire en fonction de capacités prédéfinies pour le système avionique 20 destinataire.

En complément ou en variante, l'ensemble de critères de filtrage inclut au moins un critère de condition de champ(s) dans le message.

Chaque critère de condition est par exemple choisi parmi le groupe consistant en : une interdiction d'un type donné de champ dans le message ; une obligation d'un type donné de champ dans le message ; une exclusion d'un premier type de champ par rapport à un deuxième type de champ du message ; et une vérification d'un ordonnancement donné de certains champs dans le message. Autrement dit, chaque critère de condition correspond par exemple à une condition choisie parmi le groupe consistant en : une condition de présence, une condition d'absence, une condition de mutuelle exclusion, et une condition d'ordre.

Le critère de condition correspond par exemple à la non-présence simultanée des champs RP et RI dans un message conforme à la norme ARINC 702, le champ RP définissant une route active, et le champ RI définissant une route inactive.

En complément encore, l'ensemble de critères de filtrage inclut au moins deux types distincts de critère parmi le groupe de types de critère consistant en : critère mono-champ, critère multi-champ, et critère de condition.

Selon ce complément, l'ensemble de critères de filtrage inclut de préférence au moins un critère mono-champ, au moins un critère multi-champ, et au moins un critère de condition ; c'est-à-dire au moins un critère de chacun des types précités.

En complément du filtrage dépendant du système avionique 20 destinataire et variable d'un système avionique 20 à l'autre, le module de filtrage 44 est configuré pour mettre en oeuvre une variabilité du filtrage en fonction d'un cas d'usage. Le module de filtrage 44 est par exemple configuré pour mettre en oeuvre cette variabilité dépendant du cas d'usage en variant le jeu de critère(s) de filtrage en fonction d'un cas d'usage, typiquement via un nombre de critères de filtrage augmentant avec la sévérité du cas d'usage, i.e. avec une sécurité accrue pour le cas d'usage. En variante ou en complément, le module de filtrage 44 est par exemple configuré pour mettre en oeuvre cette variabilité dépendant du cas d'usage en variant le jeu de paramètre(s) de filtrage en fonction d'un cas d'usage, typiquement via des plages de valeurs paramètre(s) de filtrage plus restrictives lorsque le cas d'usage est plus sévère ou plus sécuritaire.

Les cas d'usage sont par exemple les suivants, classés par ordre croissant d'un niveau de filtrage :
- cas de développement, également appelé cas de conception, avec un filtrage minimal ;
- cas de maintenance, avec un filtrage réduit ;
- cas opérationnel nominal, avec un filtrage nominal ;
- cas opérationnel de sécurité, par exemple en présence d'une alerte de cyberattaques ou de cyber intrusion, avec un filtrage maximal, voire une interdiction temporaire de tout message venant du domaine ouvert 18.

Le module de transmission 46 est configuré pour transmettre, à destination du système avionique 20 correspondant, chaque message validé par le module de filtrage 44.

Le module de transmission 46 est typiquement configuré pour transmettre chaque message validé à destination du système avionique 20 correspondant, selon le protocole de communication avionique respectif, c'est-à-dire le protocole de communication avionique correspondant à celui selon lequel le message a été précédemment acquis par le module d'acquisition 42.

En complément facultatif, le module d'obtention 48 est configuré pour obtenir le jeu de paramètre(s) de filtrage associé au jeu de critère(s) de filtrage.

Selon ce complément facultatif, le module de filtrage 44 est alors configuré pour filtrer chaque message selon le jeu de critère(s) de filtrage paramétré via le jeu de paramètre(s) de filtrage qui a été obtenu par le module d'obtention 48.

Selon ce complément facultatif, le module d'obtention 48 est par exemple configuré pour obtenir ledit jeu de paramètre(s) de filtrage depuis un dispositif électronique 60 externe à la passerelle 30. Avantageusement, le module d'obtention 48 est configuré pour vérifier un certificat d'authentification et/ou un certificat d'intégrité pour chaque jeu de paramètre(s) de filtrage, et pour valider alors un jeu respectif de paramètre(s) de filtrage seulement si son certificat d'authentification et/ou son certificat d'intégrité sont valides.

Le certificat d'authentification permet de vérifier que le jeu respectif de paramètre(s) de filtrage est un jeu authentique émis depuis une source reconnue, et non un jeu malfaisant émis depuis une source attaquante. Le certificat d'authentification est par exemple de type RSA à 4096 bits.

Le certificat d'intégrité permet de vérifier que le jeu respectif de paramètre(s) de filtrage est un jeu intègre qui n'a pas été corrompu lors de sa transmission depuis le dispositif électronique 60. Le certificat d'intégrité est par exemple de type SHA-2 (de l'anglais *Secure Hash Algorithm*)*.*

Le dispositif électronique 60 est connecté à la passerelle de communication 30. Le dispositif électronique 60 est typiquement inclus dans le domaine ouvert 18, et aisément accessible par un utilisateur, pour pouvoir stocker dans une mémoire (non représentée) dudit dispositif 60 de nouveaux jeux de paramètre(s) de filtrage et/ou modifier un ou plusieurs jeux de paramètre(s) de filtrage déjà stockés dans cette mémoire. L'utilisateur est typiquement un membre de l'équipage de l'aéronef 5, tel que le pilote de l'aéronef 5, ou encore un opérateur configurant l'aéronef 5 préalablement au vol.

Le fonctionnement de la passerelle de communication 30 selon l'invention va être à présent décrit en regard de la figure 2 représentant un organigramme du procédé de filtrage de message(s) de données au sein de l'installation de communication avionique 10, ledit procédé de filtrage étant mis en oeuvre par la passerelle de communication 30.

Lors d'une étape initiale 100, la passerelle de communication 30 acquiert, via son module d'acquisition 42 et de la part d'un appareil électronique 25 respectif appartenant au domaine ouvert 18, au moins un message de données à destination d'un système avionique 20 respectif appartenant au domaine avionique 15.

De manière optionnelle, à l'issue de l'étape d'acquisition 100, ou en variante - non représentée - préalablement à l'étape d'acquisition 100, la passerelle de communication 30 obtient, via son module d'obtention 48 et de la part du dispositif électronique 60, au moins un jeu de paramètre(s) de filtrage associé au jeu de critère(s) de filtrage correspondant au type de l'au moins un message acquis.

L'homme du métier comprendra alors que cette étape d'obtention 110 optionnelle permet alors de prendre en compte un jeu de paramètre(s) de filtrage qui ne serait pas préalablement stocké dans la passerelle de communication 30.

La passerelle de communication 30 passe ensuite à l'étape de filtrage 120 lors de laquelle elle filtre, via son module de filtrage 44, chaque message acquis respectif en validant ledit message s'il respecte un jeu de critère(s) de filtrage et en le bloquant dès qu'un critère de filtrage dudit jeu n'est pas respecté, le jeu de critère(s) de filtrage étant sélectionné en fonction du type dudit message et parmi l'ensemble de critères de filtrage.

Selon l'invention, lors de l'étape de filtrage 120, au moins un critère de filtrage dudit jeu est paramétré via un paramètre de filtrage respectif, et au moins un paramètre de filtrage dépend du système avionique 20 destinataire, variant de préférence d'un système avionique 20 à l'autre.

Avantageusement, chaque critère de filtrage est un critère du type choisi parmi les critères décrits précédemment, à savoir critère mono-champ, critère multi-champ, et critère de condition.

À l'issue de l'étape de filtrage 120, la passerelle de communication 30 transmet, via son module de transmission 46 et à destination du système avionique 20 destinataire, le message acquis lors de l'étape d'acquisition 100 si celui-ci a été ensuite validé lors de l'étape de filtrage 120, c'est-à-dire si ledit message respectait le jeu de critère(s) de filtrage sélectionné.

Ce filtrage sélectif et variable en fonction du système avionique 20 destinataire permet alors d'adapter le filtrage effectué à chaque système avionique 20 destinataire d'un message, et en particulier de vérifier que le message destiné à un système avionique 20 respectif est compatible dudit système avionique 20, notamment de capacité(s) dudit système avionique 20. Ce filtrage vise alors notamment à éviter que la transmission du message à destination du système avionique 20 respectif ne sature ledit système avionique 20.

A titre d'exemple, si le module de filtrage 44 est configuré pour vérifier que le nombre de points de passage contenus dans le message de plan de vol est inférieur à une valeur maximale, et si un système avionique 20, noté A, supporte seulement 200 points de passage au maximum, pendant qu'un système avionique 20, noté B, supporte 256 points de passage, alors la passerelle de communication 30 selon l'invention permet d'une part de vérifier que le nombre de points de passage contenus dans le plan de vol ne va pas excéder la capacité du système avionique 20 destinataire, et d'autre part d'avoir une valeur maximale pour ledit nombre de points de passage variable d'un système avionique 20 à l'autre, et ainsi ajustée au mieux à la capacité de chaque système avionique 20, avec par exemple une valeur maximale égale à 200 pour le système A, et égale à 256 pour le système B.

On conçoit ainsi que la passerelle de communication 30 selon l'invention permet d'améliorer encore le filtrage des messages issus du domaine ouvert 18 à destination du domaine avionique 15, notamment pour réduire un risque de cyberattaque visant à entraîner un dysfonctionnement de certains systèmes avioniques 20.

## Revendications

1. Passerelle électronique de communication (30) destinée à être embarquée à bord d'un aéronef (5), l'aéronef (5) comportant une installation de communication (10) compartimentée en un domaine avionique (15) et un domaine ouvert (18), externe au domaine avionique (15), l'installation de communication (10) comportant plusieurs systèmes avioniques (20) appartenant au domaine avionique (15) et un ou plusieurs appareils électroniques (25) appartenant au domaine ouvert (18),
la passerelle de communication (30) étant apte à être connectée entre le ou les appareils électroniques (25) et les systèmes avioniques (20), la passerelle de communication (30) comprenant :
- un module d'acquisition (42) configuré pour acquérir, de la part d'un appareil électronique (25) appartenant au domaine ouvert (18), au moins un message de données à destination d'un système avionique (20) appartenant au domaine avionique (15) ;
- un module de filtrage (44) connecté en sortie du module d'acquisition (42) et configuré pour filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- un module de transmission (46) connecté en sortie du module de filtrage (44) et configuré pour transmettre, à destination du système avionique (20) correspondant, chaque message validé par le module de filtrage (44) ;
**caractérisée en ce qu'**au moins un critère de filtrage dudit jeu est paramétré via un paramètre de filtrage respectif, et au moins un paramètre de filtrage dépend du système avionique (20) destinataire, en étant variable d'un système avionique (20) à l'autre.

2. Passerelle (30) selon la revendication 1, dans laquelle la passerelle (30) comprend en outre un module d'obtention (48) configuré pour obtenir, depuis un dispositif électronique externe à la passerelle (30), un jeu de paramètre(s) de filtrage associé au jeu de critère(s) de filtrage,
le module de filtrage (44) étant alors configuré pour filtrer chaque message selon le jeu de critère(s) de filtrage paramétré via le jeu obtenu de paramètre(s) de filtrage.

3. Passerelle (30) selon la revendication 1 ou 2, dans laquelle chaque message de données acquis comporte plusieurs champs de différents types, et l'ensemble de critères de filtrage inclut au moins un critère de filtrage dépendant d'un seul type de champ, dit critère mono-champ ;
chaque critère mono-champ étant choisi parmi le groupe consistant en : un critère basé sur un nombre d'occurrences d'un type donné de champ dans le message ; un critère basé sur un nombre d'occurrences d'un caractère donné dans un champ donné du message ; et un critère basé sur l'appartenance d'une valeur d'un champ donné du message à une plage de valeurs prédéfinie.

4. Passerelle (30) selon l'une quelconque des revendications précédentes, dans laquelle chaque message de données acquis comporte plusieurs champs de différents types, et l'ensemble de critères de filtrage inclut au moins un critère de filtrage dépendant de plusieurs types de champ à la fois, dit critère multi-champ ;
au moins un critère multi-champ étant de préférence basé sur la combinaison d'une valeur d'un type primaire de champ du message et d'un nombre d'occurrences d'un type secondaire de champ dudit message.

5. Passerelle (30) selon l'une quelconque des revendications précédentes, dans laquelle chaque message de données acquis comporte plusieurs champs de différents types, et l'ensemble de critères de filtrage inclut au moins un critère de condition de champ(s) dans le message ;
chaque critère de condition étant choisi parmi le groupe consistant en : une interdiction d'un type donné de champ dans le message ; une obligation d'un type donné de champ dans le message ; une exclusion d'un premier type de champ par rapport à un deuxième type de champ du message ; et une vérification d'un ordonnancement donné de certains champs dans le message.

6. Passerelle (30) selon les revendications 3 à 5, dans laquelle l'ensemble de critères de filtrage inclut au moins deux types distincts de critère parmi le groupe de types de critère consistant en : critère mono-champ, critère multi-champ, et critère de condition ;
l'ensemble de critères de filtrage incluant de préférence au moins un critère mono-champ, au moins un critère multi-champ, et au moins un critère de condition.

7. Passerelle (30) selon l'une quelconque des revendications précédentes, dans laquelle le domaine avionique (15) est un domaine correspondant à un niveau de sécurité le plus élevé à bord de l'aéronef (5).

8. Aéronef (5) comprenant une installation de communication (10) compartimentée en un domaine avionique (15) et un domaine ouvert (18) externe au domaine avionique (15) ; l'installation de communication (10) comportant plusieurs systèmes avioniques (20) appartenant au domaine avionique (15), un ou plusieurs appareils électroniques (25) appartenant au domaine ouvert (18), et une passerelle électronique de communication (30) connectée entre le ou les appareils électroniques (25) et les systèmes avioniques (20), **caractérisé en ce que** la passerelle de communication (30) est selon l'une quelconque des revendications précédentes.

9. Procédé de filtrage de message(s) de données au sein d'une installation de communication (10) avionique destinée à être embarquée à bord d'un aéronef (5), l'installation de communication (10) étant compartimentée en un domaine avionique (15) et un domaine ouvert (18), externe au domaine avionique (15), et comportant plusieurs systèmes avioniques (20) appartenant au domaine avionique (15) et un ou plusieurs appareils électroniques (25) appartenant au domaine ouvert (18), le procédé de filtrage étant mis en oeuvre par une passerelle électronique de communication (30) et comprenant les étapes suivantes :
- acquérir, de la part d'un appareil électronique (25) appartenant au domaine ouvert (18), au moins un message de données à destination d'un système avionique (20) appartenant au domaine avionique (15) ;
- filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- transmettre chaque message validé à destination du système avionique (20) correspondant ;
**caractérisé en ce qu'**au moins un critère de filtrage dudit jeu est paramétré via un paramètre de filtrage respectif, et au moins un paramètre de filtrage dépend du système avionique (20) destinataire, en étant variable d'un système avionique (20) à l'autre.

10. Programme d'ordinateur comportant des instructions logicielles qui, lorsqu'elles sont exécutées par un ordinateur, mettent en oeuvre un procédé selon la revendication précédente.

## Revendications modifiées

### Revendications modifiées conformément à la règle 137(2) CBE.

1. Passerelle électronique de communication (30) destinée à être embarquée à bord d'un aéronef (5), l'aéronef (5) comportant une installation de communication (10) compartimentée en un domaine avionique (15) et un domaine ouvert (18), externe au domaine avionique (15), l'installation de communication (10) comportant plusieurs systèmes avioniques (20) appartenant au domaine avionique (15) et un ou plusieurs appareils électroniques (25) appartenant au domaine ouvert (18),
la passerelle de communication (30) étant apte à être connectée entre le ou les appareils électroniques (25) et les systèmes avioniques (20), la passerelle de communication (30) comprenant :
- un module d'acquisition (42) configuré pour acquérir, de la part d'un appareil électronique (25) appartenant au domaine ouvert (18), au moins un message de données à destination d'un système avionique (20) appartenant au domaine avionique (15) ;
- un module de filtrage (44) connecté en sortie du module d'acquisition (42) et configuré pour filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- un module de transmission (46) connecté en sortie du module de filtrage (44) et configuré pour transmettre, à destination du système avionique (20) correspondant, chaque message validé par le module de filtrage (44) ;
**caractérisée en ce qu'**au moins un critère de filtrage dudit jeu est paramétré via un paramètre de filtrage respectif, et au moins un paramètre de filtrage dépend du système avionique (20) destinataire, en étant variable d'un système avionique (20) à l'autre.

2. Passerelle (30) selon la revendication 1, dans laquelle la passerelle (30) comprend en outre un module d'obtention (48) configuré pour obtenir, depuis un dispositif électronique externe à la passerelle (30), un jeu de paramètre(s) de filtrage associé au jeu de critère(s) de filtrage,
le module de filtrage (44) étant alors configuré pour filtrer chaque message selon le jeu de critère(s) de filtrage paramétré via le jeu obtenu de paramètre(s) de filtrage.

3. Passerelle (30) selon la revendication 1 ou 2, dans laquelle chaque message de données acquis comporte plusieurs champs de différents types, et l'ensemble de critères de filtrage inclut au moins un critère de filtrage dépendant d'un seul type de champ, dit critère mono-champ ;
chaque critère mono-champ étant choisi parmi le groupe consistant en : un critère basé sur un nombre d'occurrences d'un type donné de champ dans le message ; un critère basé sur un nombre d'occurrences d'un caractère donné dans un champ donné du message ; et un critère basé sur l'appartenance d'une valeur d'un champ donné du message à une plage de valeurs prédéfinie.

4. Passerelle (30) selon l'une quelconque des revendications précédentes, dans laquelle chaque message de données acquis comporte plusieurs champs de différents types, et l'ensemble de critères de filtrage inclut au moins un critère de filtrage dépendant de plusieurs types de champ à la fois, dit critère multi-champ ;
au moins un critère multi-champ étant de préférence basé sur la combinaison d'une valeur d'un type primaire de champ du message et d'un nombre d'occurrences d'un type secondaire de champ dudit message.

5. Passerelle (30) selon l'une quelconque des revendications précédentes, dans laquelle chaque message de données acquis comporte plusieurs champs de différents types, et l'ensemble de critères de filtrage inclut au moins un critère de condition de champ(s) dans le message ;
chaque critère de condition étant choisi parmi le groupe consistant en : une interdiction d'un type donné de champ dans le message ; une obligation d'un type donné de champ dans le message ; une exclusion d'un premier type de champ par rapport à un deuxième type de champ du message ; et une vérification d'un ordonnancement donné de certains champs dans le message.

6. Passerelle (30) selon les revendications 3 à 5, dans laquelle l'ensemble de critères de filtrage inclut au moins deux types distincts de critère parmi le groupe de types de critère consistant en : critère mono-champ, critère multi-champ, et critère de condition ;
l'ensemble de critères de filtrage incluant de préférence au moins un critère mono-champ, au moins un critère multi-champ, et au moins un critère de condition.

7. Passerelle (30) selon l'une quelconque des revendications précédentes, dans laquelle le domaine avionique (15) est un domaine correspondant à un niveau de sécurité le plus élevé à bord de l'aéronef (5).

8. Aéronef (5) comprenant une installation de communication (10) compartimentée en un domaine avionique (15) et un domaine ouvert (18) externe au domaine avionique (15) ; l'installation de communication (10) comportant plusieurs systèmes avioniques (20) appartenant au domaine avionique (15), un ou plusieurs appareils électroniques (25) appartenant au domaine ouvert (18), et une passerelle électronique de communication (30) connectée entre le ou les appareils électroniques (25) et les systèmes avioniques (20), **caractérisé en ce que** la passerelle de communication (30) est selon l'une quelconque des revendications précédentes.

9. Procédé de filtrage de message(s) de données au sein d'une installation de communication (10) avionique destinée à être embarquée à bord d'un aéronef (5), l'installation de communication (10) étant compartimentée en un domaine avionique (15) et un domaine ouvert (18), externe au domaine avionique (15), et comportant plusieurs systèmes avioniques (20) appartenant au domaine avionique (15) et un ou plusieurs appareils électroniques (25) appartenant au domaine ouvert (18), le procédé de filtrage étant mis en oeuvre par une passerelle électronique de communication (30) et comprenant les étapes suivantes :
- acquérir, de la part d'un appareil électronique (25) appartenant au domaine ouvert (18), au moins un message de données à destination d'un système avionique (20) appartenant au domaine avionique (15) ;
- filtrer chaque message acquis respectif, en validant ledit message s'il respecte un jeu de critère(s) de filtrage et en le bloquant dès qu'un critère de filtrage dudit jeu n'est pas respecté ; le jeu de critère(s) de filtrage étant sélectionné, parmi un ensemble de critères de filtrage, en fonction d'un type dudit message ;
- transmettre chaque message validé à destination du système avionique (20) correspondant ;
**caractérisé en ce qu'**au moins un critère de filtrage dudit jeu est paramétré via un paramètre de filtrage respectif, et au moins un paramètre de filtrage dépend du système avionique (20) destinataire, en étant variable d'un système avionique (20) à l'autre.

10. Programme d'ordinateur comportant des instructions logicielles qui, lorsqu'elles sont exécutées par un ordinateur, mettent en oeuvre un procédé selon la revendication précédente.
